# EUROPÄISCHE PATENTANMELDUNG

(11) **EP 2 363 507 A1**
(43) Veröffentlichungstag der Anmeldung: **07.09.2011**
(21) Anmeldenummer: 11156614.7
(22) Anmeldetag: 02.03.2011
(51) Int. Cl.: C21D 1/10, C21D 1/42, C21D 1/667, C21D 9/32, C21D 9/34, C21D 9/40

(54) **Härteeinrichtung**

(30) Priorität: 03.03.2010 DE 102010002531
(71) Anmelder: ELDEC Schwenk Induction GmbH, 72280 Dornstetten (DE)
(72) Erfinder: Dr. Krause, Christian, 72250, Freudenstadt (DE)
(74) Vertreter: Hoeger, Stellrecht & Partner Patentanwälte

(57) **Zusammenfassung**

Um eine Härteeinrichtung zum induktiven Härten von sich in einer Längsrichtung erstreckenden Werkstücken in einem sich von einer Oberflächenkontur in das Werkstück hineinerstreckenden Härtebereich, umfassend einen Induktor zur Erzeugung einer Aufheizzone im Werkstück und eine Kühleinheit zur Abkühlung des Werkstücks, derart zu verbessern, dass eine Abkühlung des Werkstücks in möglichst geringem Abstand zur Aufheizzone bei aktiv betriebenem Induktor möglich ist, wird vorgeschlagen, dass die Kühleinheit mindestens eine ein Kühlmedium zu Kühlnebeltröpfchen zerstäubende Kühlnebelsprühdüse aufweist, dass die Kühleinheit einen Kühlnebelstrom aus den Kühlnebeltröpfchen erzeugt und mit dem Kühlnebelstrom eine Abkühlzone des Werkstücks zum Abkühlen derselben beaufschlagt.

## Beschreibung

Die Erfindung betrifft eine Härteeinrichtung zum induktiven Härten von sich in einer Längsrichtung erstreckenden Werkstücken in einem sich von einer Oberflächenkontur in das Werkstück hinein erstreckenden Härtebereich, umfassend einen Induktor zur Erzeugung einer Aufheizzone im Werkstück und eine Kühleinheit zur raschen Abkühlung des Werkstücks.

Derartige Härteeinrichtungen sind aus dem Stand der Technik bekannt.

Bei diesen wird üblicherweise mittels des Induktors das Werkstück in einer Aufheizzone aufgeheizt und anschließend das aufgeheizte Werkstück abgekühlt, insbesondere abgeschreckt.

Das Problem derartiger Härteeinrichtungen besteht darin, dass das Abkühlen des aufgeheizten Werkstücks mit einem flüssigen Kühlmedium erfolgt, das zur Abkühlung nur dann eingesetzt werden kann, wenn es beim Betrieb des Induktors zum Aufheizen der Aufheizzone nicht die Aufheizzone erreicht.

Das heißt, dass das flüssige Kühlmedium entweder dann aufgebracht werden kann, wenn der Induktor nicht in Betrieb ist, oder nur dann aufgebracht werden kann, wenn die Abkühlung in großem Abstand von dem Induktor erfolgt.

Der Erfindung liegt daher die Aufgabe zugrunde, eine Härteeinrichtung der gattungsgemäßen Art derart zu verbessern, dass eine Abkühlung des Werkstücks in möglichst geringem Abstand zur Aufheizzone bei aktiv betriebenem Induktor möglich ist.

Diese Aufgabe wird bei einer Härteeinrichtung der eingangs beschriebenen Art erfindungsgemäß dadurch gelöst, dass die Kühleinheit mindestens eine ein Kühlmedium zu Kühlnebeltröpfchen zersträubende Kühlnebelsprühdüsen aufweist, dass die Kühleinheit einen Kühlnebelstrom aus den Kühlnebeltröpfchen erzeugt und mit dem Kühlnebelstrom eine Abkühlzone zum Abkühlen derselben beaufschlagt.

Der Vorteil der erfindungsgemäßen Lösung ist darin zu sehen, dass durch das Zerstäuben eines flüssigen Kühlmediums in Kühlnebeltröpfchen eine große Oberfläche des Kühlmediums durch die Kühlnebeltröpfchen entsteht und dass die Kühlnebeltröpfchen beim Auftreffen auf das aufgeheizte Werkstück eine effiziente Kühlung desselben bewirken, ohne dass sich flüssiges Kühlmedium auf der Oberflächenkontur des Werkstücks niederschlägt und entlang derselben fließt, da das Kühlmedium in den Kühlnebeltröpfchen beim Auftreffen auf die aufgeheizte Oberflächenkontur verdampft und sich nicht mehr als Flüssigkeit auf der heißen Oberflächenkontur niederschlagen kann.

Prinzipiell könnte der Kühlnebelstrom lediglich durch Zerstäuben des Kühlmediums in den Kühlnebelsprühdüsen erzeugt werden und sich aufgrund der kinetischen Energie der Kühlnebeltröpfchen, die beim Zerstäuben des Kühlmediums entsteht, in Richtung der Abkühlzone ausbreiten.

Besonders günstig ist es jedoch, wenn die Kühleinheit einen die Ausbreitung des Kühlnebelstroms in Richtung der Abkühlzone mitführenden Kühlgasstrom erzeugt, so dass durch den Kühlgasstrom der Kühlnebelstrom gezielt in die Abkühlzone geführt werden kann und außerdem das Gas im Kühlgasstrom noch die Kühlwirkung unterstützt.

Besonders günstig ist es dabei, wenn der Kühlgasstrom den Kühlnebelstrom in Richtung der Abkühlzone beschleunigt, so dass sich mit dem Kühlgasstrom der Kühlnebelstrom ganz gezielt auf die Abkühlzone richten lässt und die Kühlwirkung durch eine Erhöhung der Tropfengeschwindigkeit, insbesondere durch eine Senkung eines Tropfendurchmessers, verstärkt wird.

Hinsichtlich der Erzeugung des Kühlgasstroms sind die unterschiedlichsten Möglichkeiten denkbar, beispielsweise könnte ein Gasstrom dem Kühlnebelstrom nach Erzeugung desselben durch die Kühlnebelsprühdüsen zugeführt werden.

Eine besonders günstige Lösung sieht jedoch vor, dass die Kühlnebelsprühdüse den Kühlnebelstrom mit einem Gasstrom zu dem Kühlgasstrom mischt.

Insbesondere ist hierbei vorgesehen, dass die Kühlnebelsprühdüsen beim Zerstäuben des Kühlmediums zu dem Kühlnebelstrom den Gasstrom zuführen und den Kühlnebelstrom sowie den Gasstrom intern oder extern miteinander mischen.

Hinsichtlich der Anordnung der Kühlnebelsprühdüsen wurden bislang keine näheren Angaben gemacht.

So sieht eine vorteilhafte Lösung vor, dass die Kühleinheit parallel zu der Querrichtung aufeinanderfolgend angeordnete Kühlnebelsprühdüsen aufweist, um somit in einfacher Weise das Werkstück über seine Erstreckung in Querrichtung kühlen zu können.

Besonders vorteilhaft ist es, wenn sich der Kühlnebelstrom in der Querrichtung über die Breite der Oberflächenkontur des Werkstücks erstreckt, so dass das Werkstück quer zu seiner Längsrichtung über seine gesamte Breite kühlbar ist.

Hinsichtlich der Bewegung zwischen dem Induktor und dem Werkstück wurden bislang keine näheren Angaben gemacht.

So wird die eingangs genannte Aufgabe erfindungsgemäß auch dadurch gelöst, dass die Härteeinrichtung eine Bewegungsvorrichtung für den Induktor aufweist und dass die Bewegungsvorrichtung eine Relativbewegung zwischen dem Induktor und dem Werkstück erzeugt, mit welcher der Induktor der Oberflächenkontur des Werkstücks folgend positionierbar ist.

Das heißt, dass damit die Möglichkeit besteht, den Induktor entsprechend der Form oder des Verlaufs der Oberflächenkontur des Werkstücks, beispielsweise mit einem definierten Abstand oder mit Abständen innerhalb eines definierten Abstandsbereichs, zu positionieren, so dass damit immer optimale Bedingungen für die Aufheizung des Werkstücks in der Aufheizzone vorliegen.

Insbesondere lässt sich damit erreichen, dass der Induktor das Material des Werkstücks stets mit einer bis zu definierten Tiefe in das Werkstück von der Oberflächenkontur ausgehend eindringenden Aufheizzone aufheizt.

Dabei kann die Positionierung des Induktors relativ zur Oberflächenkontur in unterschiedlichster Art und Weise erfolgen.

So ist es beispielsweise denkbar, lediglich das Werkstück bei stehendem Induktor relativ zum Induktor zu bewegen und zu positionieren.

Eine andere Möglichkeit sieht vor, bei stehendem Werkstück den Induktor relativ zum Werkstück so zu bewegen und zu positionieren, dass dieser der Oberflächenkontur desselben erfolgt.

Eine weitere bevorzugte Lösung sieht jedoch vor, dass sowohl das Werkstück als auch der Induktor bewegt werden, um alle Bewegungen zu erzeugen, mit welchen der Induktor der Oberflächenkontur des Werkstücks nachfolgend positionierbar ist.

Insbesondere erfolgt erfindungsgemäß ein Bewegen von Induktor und Oberflächenkontur relativ zueinander dergestalt, dass der Induktor in einer Bewegungsvorschubrichtung aufeinanderfolgende, unterschiedliche Bereiche, insbesondere ineinander übergehende Bereiche der Oberflächenkontur aufheizt.

Eine besonders günstige Lösung sieht dabei vor, dass mit der Bewegungsvorrichtung das Werkstück bewegbar ist, um eine Bewegung des Induktors relativ zur Oberflächenkontur in einer Bewegungsvorschubrichtung zu erreichen.

Ferner sieht eine vorteilhafte Lösung vor, dass mit der Bewegungsvorrichtung der Induktor in einer quer zur Oberflächenkontur verlaufenden Zustellrichtung relativ zum Werkstück bewegbar ist.

Darüber hinaus sieht eine vorteilhafte Lösung vor, dass mit der Bewegungsvorrichtung der Induktor um eine Drehachse drehbar ist.

Eine derartige Drehung des Induktors könnte beispielsweise dazu eingesetzt werden, den Induktor zum Nachführen der Oberflächenkontur zu bewegen.

Eine vorteilhafte Lösung sieht vor, dass eine Drehung des Induktors dazu eingesetzt wird, eine Ausrichtung des Induktors relativ zur Oberflächenkontur an die Oberflächenkontur anzupassen.

Darüber hinaus sieht eine vorteilhafte Lösung vor, dass die Härteeinrichtung eine Bewegungsvorrichtung für die Kühleinheit aufweist und dass die Bewegungsvorrichtung eine Relativbewegung zwischen der Kühleinheit und dem Werkstück erzeugt, mit welcher die Kühleinheit der Oberflächenkontur folgend positionierbar ist.

Eine derartige Bewegung der Kühleinheit und des Werkstücks relativ zueinander, um die Kühleinheit der Oberflächenkontur des Werkstücks nachführend zu positionieren, kann ebenfalls in unterschiedlichster Art und Weise erfolgen.

Beispielsweise kann die Kühleinheit stationär angeordnet sein und das Werkstück relativ zur Kühleinheit bewegbar und positionierbar sein oder das Werkstück stationär angeordnet sein und die Kühleinheit relativ zum Werkstück bewegbar und positionierbar sein, wobei eine besonders günstige Lösung vorsieht, sowohl das Werkstück als auch die Kühleinheit zu bewegen, um die verschiedenen Bewegungen zur Nachführung und Positionierung der Kühleinheit entsprechend der Oberflächenkontur einfach zu realisieren.

So sieht eine günstige Lösung vor, dass mit der Bewegungsvorrichtung das Werkstück bewegbar ist, um eine Bewegung der Kühleinheit relativ zur Oberflächenkontur in der Bewegungsvorschubrichtung zu erreichen.

Ferner sieht eine weitere günstige Lösung vor, dass mit der Bewegungsvorrichtung die Kühleinheit in einer quer zur Oberflächenkontur verlaufenden Zustellrichtung bewegbar ist.

Eine weitere vorteilhafte Lösung sieht vor, dass mit der Bewegungsvorrichtung die Kühleinheit um eine Drehachse drehbar ist.

Besonders günstig ist es, wenn mit der Bewegungsvorrichtung der Induktor und die Kühleinheit gemeinsam in der Bewegungsvorschubrichtung relativ zur Oberflächenkontur bewegbar sind, wobei - wie bereits dargelegt - dies insbesondere dadurch erfolgen kann, dass das Werkstück hierzu entgegengesetzt zur Bewegungsvorschubrichtung bewegbar ist, während der Induktor und die Kühleinheit in der Bewegungsvorschubrichtung nicht bewegbar sind.

Außerdem ist es vorteilhaft, wenn mit der Bewegungsvorrichtung der Induktor und die Kühleinheit gemeinsam in der Zustellrichtung relativ zur Oberflächenkontur des Werkstücks bewegbar sind.

Eine weitere vorteilhafte Lösung sieht vor, dass mit der Bewegungsvorrichtung der Induktor und die Kühleinheit gemeinsam relativ zur Oberflächenkontur drehbar sind.

Ferner sieht eine weitere vorteilhafte Lösung, die insbesondere eine optimale Abkühlung in der Abkühlzone erlaubt und insbesondere auch eine optimale Positionierung der Abkühlzone erlaubt, dass mit der Bewegungsvorrichtung die Kühleinheit relativ zum Induktor verschwenkbar ist.

Eine derartige Verschwenkbarkeit der Kühleinheit relativ zum Induktor kann durch eine zusätzliche schwenkbare Lagerung der Kühleinheit erfolgen.

Dabei kann die Kühleinheit entweder schwenkbar am Induktor selbst gehalten sein oder schwenkbar relativ zu einem Maschinenelement, welches den Induktor trägt.

Hinsichtlich der Ausbildung des Induktors wurden bislang keine näheren Angaben gemacht.

So ist vorzugsweise vorgesehen, dass der Induktor ein sich in einer quer zur Längsrichtung verlaufenden Querrichtung erstreckendes und insbesondere parallel zur Oberflächenkontur verlaufendes Induktionsleiterstück aufweist, welches das zur Aufheizung des Materials des Werkstücks in der Aufheizzone erforderliche elektromagnetische Feld erzeugt.

Vorzugsweise ist dabei das Induktionsleiterstück so ausgebildet, dass es sich mindestens über eine Breite des Werkstücks in der Querrichtung erstreckt.

Um das Induktionsleiterstück auch kühlen zu können, ist vorzugsweise vorgesehen, dass das Induktionsleiterstück mit einem Kühlkanal versehen ist, welcher ein Kühlmedium führt.

Um außerdem den vom Induktionsleiterstück erzeugten Feldverlauf im Werkstück möglichst auf eine kleine Aufheizzone zu konzentrieren, ist vorzugsweise das Induktionsleiterstück auf einer Seite mit einem Feldkonzentrator versehen. Dabei ist der Feldkonzentrator zweckmäßigerweise auf einer der Oberflächenkontur des Werkstücks abgewandten Seite des Induktionsleiterstücks angeordnet.

Ferner ist vorzugsweise der Feldkonzentrator auf einer der Kühleinrichtung zugewandten Seite des Induktionsleiterstücks angeordnet, um die Kühleinrichtung gegenüber dem von dem Induktionsleiterstück erzeugten elektromagnetischen Feld abzuschirmen.

Eine optimale Kühlung des Induktionsleiterstücks ist dann erreichbar, wenn das Induktionsleiterstück endseitig mit Zuleitungsstücken verbunden ist, die das das Induktionsleiterstück durchströmende Kühlmedium führen.

Darüber hinaus wird die eingangs genannte Aufgabe bei einem Verfahren zum Induktionshärten eines sich in einer Längsrichtung erstreckenden Werkstücks in einem sich von einer Oberflächenkontur in das Werkstück hinein erstreckenden Härtebereich mit einem Induktor zum Aufheizen des Werkstücks in einer Aufheizzone und mit einer Kühleinheit zum Abkühlen des Werkstücks erfindungsgemäß dadurch gelöst, dass das Werkstück in einer Abkühlzone mit einem Kühlnebelstrom gekühlt wird.

Ein derartiger Kühlnebelstrom hat den Vorteil, dass sich in diesem Kühlnebeltröpfchen befinden, die sich nicht als Flüssigkeit auf der aufgeheizten Oberflächenkontur des Werkstücks niederschlagen, sondern beim Auftreffen auf derselben im Bereich der Abkühlzone zumindest teilweise verdampfen und somit sämtliche Probleme im Zusammenhang mit flüssigem Kühlmedium vermieden werden.

Besonders vorteilhaft ist es dabei, wenn der Kühlnebelstrom in einem Kühlgasstrom zu der Aufheizzone geführt wird, so dass der Kühlnebelstrom gezielt in die Aufheizzone geführt werden kann und somit in dieser ein gezieltes und auch schnelleres Abkühlen des Werkstücks erfolgt.

Darüber hinaus wird die eingangs genannte Aufgabe auch bei einem Verfahren zum Induktionshärten eines sich in einer Längsrichtung erstreckenden Werkstücks in einem sich von einer Oberflächenkontur in das Werkstück hinein erstreckenden Härtebereich mit einem Induktor zum Aufheizen des Werkstücks in einer Aufheizzone und mit einer Kühleinheit zum Abkühlen des Werkstücks erfindungsgemäß dadurch gelöst, dass die Oberflächenkontur und der Induktor relativ zueinander in einer Bewegungsvorschubrichtung und in einer Zustellrichtung bewegt werden, um den Induktor der Oberflächenkontur nachzuführen.

Diese Lösung hat den großen Vorteil, dass damit stets optimale Bedingungen zum Aufheizen des Werkstücks in der Aufheizzone und somit auch optimale Bedingungen zum Aufrecht erhalten einer Aufheizzone mit im Wesentlichen konstanter Eindringtiefe in das Werkstück vorliegen.

Dabei hat es sich als besonders günstig erwiesen, wenn der Induktor relativ zum Verlauf der Oberflächenkontur mit einer derartigen, insbesondere variierenden, Geschwindigkeit bewegbar ist, dass bei dem Wandern der Aufheizzone stets in dieser Aufheizzone dasselbe Temperaturprofil auftritt und somit auch ein Härten des Werkstücks mit im Wesentlichen konstanter Einhärtungstiefe erfolgt.

Unter einem Temperaturprofil ist dabei der räumliche Temperaturverlauf in der Oberflächenkontur und ausgehend von der Oberflächenkontur im Werkstück zu verstehen.

Ferner wird die eingangs genannte Aufgabe bei einem Verfahren zum Induktionshärten eines sich in einer Längsrichtung erstreckenden Werkstücks in einem sich von einer Oberflächenkontur in das Werkstück hinein erstreckenden Härtebereich mit einem Induktor zum Aufheizen des Werkstücks in einer Aufheizzone und mit einer Kühleinheit zum Abkühlen des Werkstücks erfindungsgemäß dadurch gelöst, dass das Härten des Werkstücks durch Aufheizen des Werkstücks in der Aufheizzone und Abkühlen des Werkstücks in der Abkühlzone durch Einstellen von mindestens einer der Größen
- Position des Induktors relativ zur Oberflächenkontur,
- Geschwindigkeit in der Bewegungsvorschubrichtung,
- Strom durch den Induktor,
- Kühlkapazität des Kühlgasstroms pro Zeiteinheit, insbesondere Beaufschlagungsdichte,
- Lage der Abkühlzone relativ zur Aufheizzone
definiert durchführen lässt.

Der Vorteil der erfindungsgemäßen Lösung ist damit darin gegeben, dass mit dieser die Möglichkeit besteht, einen sich ausgehend von der Oberflächenkontur in das Werkstück hinein erstreckenden Härtebereich zu erzeugen, welcher eine im Wesentlichen konstante Ausdehnung ausgehend von der Oberflächenkontur aufweist und auch eine im Wesentlichen konstante Härte über seine ganze Erstreckung in Längsrichtung, so dass damit die Härtung des Werkstücks entlang der Oberflächenkontur im Wesentlichen homogen ist und insbesondere keine "Weichstellen" durch nicht ausreichende Härtung des Materials des Werkstücks an diesen Stellen, aufweist.

Insbesondere lassen sich mit der erfindungsgemäßen Lösung ringförmige Werkstücke, vorzugsweise Zahnräder oder Kulissenräder, vorteilhaft härten, da die Möglichkeit besteht, unabhängig von dem Verlauf der Oberflächenkontur, beispielsweise bei einer Verzahnung oder einer Kulissen- oder Nockenform, einen Härtebereich mit konstanter Ausdehnung relativ zur Oberflächenkontur und im Wesentlichen in der Längsrichtung und Querrichtung der Oberflächenkontur konstanter Härte und Tragfähigkeit zu erreichen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels einer erfindungsgemäßen Härteeinrichtung;
- Fig. 2: eine ausschnittsweise Darstellung einer erfindungsgemäßen Kühleinheit mit einer Kühlnebelsprühdüse und des entstehenden Kühlnebelstroms;
- Fig. 3: einen Schnitt durch eine Ausführungsmöglichkeit einer erfindungsgemäßen Kühlnebelsprühdüse;
- Fig. 4: eine Seitenansicht eines zweiten Ausführungsbeispiels einer erfindungsgemäßen Härteeinrichtung;
- Fig. 5: eine Draufsicht in Richtung des Pfeils A auf das zweite Ausführungsbeispiel der erfindungsgemäßen Härteeinrichtung;
- Fig. 6: einen Schnitt längs Linie 6-6 in Fig. 5;
- Fig. 7: einen Schnitt längs Linie 7-7 in Fig. 6;
- Fig. 8: einen Schnitt ähnlich Fig. 7 beim Härten einer Verzahnung im Bereich einer absteigenden Flanke;
- Fig. 9: einen Schnitt ähnlich Fig. 8 beim Härten der Verzahnung im Bereich eines Zahngrunds und
- Fig. 10: einen Schnitt ähnlich Fig. 8 beim Härten im Bereich einer ansteigenden Flanke.

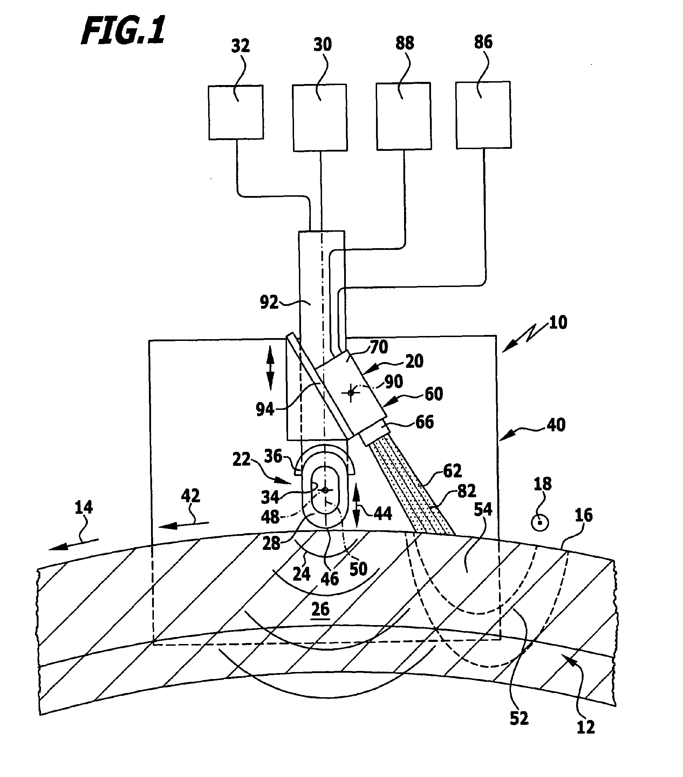

Ein erstes, in Fig. 1 schematisch dargestelltes Ausführungsbeispiel einer erfindungsgemäßen Härteeinrichtung 10 zum Härten von Werkstücken 12, beispielsweise ringförmigen Körpern, welche sich in einer Längsrichtung 14, beispielsweise einer Umfangsrichtung, erstrecken, und eine Oberflächenkontur 16 aufweisen, die sich in einer senkrecht zur Längsrichtung 14 verlaufenden Querrichtung 18 mit ihrer Breite erstreckt, umfasst eine als Ganzes mit 20 bezeichnete Härteeinheit mit einem Induktor 22 zur Erzeugung eines zeitlich veränderlichen elektromagnetischen Feldes 24, welches in das Werkstück 12 von Seiten der Oberflächenkontur 16 her eindringt und das Werkstück 12 im Bereich einer sich an die Oberflächenkontur 16 anschließenden Aufheizzone 26 durch im Bereich dieser Aufheizzone 26 entstehende Wirbelströme aufheizt.

Die Versorgung des Induktors 22 erfolgt, wie in Fig. 1 schematisch dargestellt, über einen Generator 30, der den zeitlich veränderlichen Strom zum Induktor 22 liefert.

Ferner erfolgt vorzugsweise auch eine Kühlung des Induktors 22 durch eine Induktorkühlung 32, welche ein Kühlmedium durch einen in dem Induktor 22 verlaufenden Kühlkanal 34 hindurchführt.

Zur Festlegung des Verlaufs des elektromagnetischen Feldes 24 und somit zur Festlegung der räumlichen Ausdehnung der Aufheizzone 26 ist auf einer der Aufheizzone 26 abgewandten Seite des Induktionsleiterstücks 28 ein Feldkonzentrator 36 vorgesehen.

Die Härteeinheit 20 mit dem Induktor 32 sitzt dabei auf einer schematisch dargestellten Bewegungsvorrichtung 40, welche eine Relativbewegung zwischen dem Induktor 22 und dem Werkstück 12 derart erzeugt, dass sich der Induktor 22 und das Werkstück 12 relativ zueinander in einer parallel zur Längsrichtung 14 verlaufenden Bewegungsvorschubrichtung 42 bewegen und auch derart, dass der Induktor 22 so relativ zur Oberflächenkontur 16 des Werkstücks 12 positioniert ist, dass eine definierte Ausbildung der Aufheizzone 26 ausgehend von der Oberflächenkontur 16 im Werkstück 12 erfolgt.

Diese Positionierung erfolgt durch Relativbewegung des Induktors 22 zur Oberflächenkontur 16 in einer Zustellrichtung 44, welche quer zur Bewegungsvorschubrichtung 42 verläuft und vorzugsweise quer zur Oberflächenkontur 16, um einen Abstand zwischen einer der Oberflächenkontur 16 nächstliegenden Induktorseite 46 und einem dem Induktor 46 nächstliegenden Bereich der Oberflächenkontur 16 festzulegen.

Durch die Relativbewegung zwischen dem Induktor 22 und dem Werkstück 12 in der Bewegungsvorschubrichtung 42 wandert die Aufheizzone 26 relativ zum Werkstück 12 mit dem Induktor 22 mit, so dass bezogen auf die Bewegungsvorschubrichtung 42 hinter dem Induktor 22 durch die weiterwandernde Aufheizzone 26 aufgeheiztes Material des Werkstücks 12 zurückbleibt, welches zur oberflächennahen Härtung des Werkstücks 12 in einem oberflächennahen Bereich 52 abgekühlt oder noch besser abgeschreckt wird, wobei eine aktive Abkühlung des hinter dem Induktor 22 liegenden Bereichs 52 in einer Abkühlzone 54 erfolgt.

Ein aktives Abkühlen des Materials des Werkstücks 12 in der Abkühlzone 54 erfolgt durch eine Kühleinheit 60, welche einen Kühlnebelstrom 62 erzeugt, der auf die Oberflächenkontur 16 innerhalb der Abkühlzone 54 auftrifft und die rasche Abkühlung des Materials des Werkstücks 12 innerhalb der Abkühlzone 54 bewirkt.

Für die Lage der Abkühlzone 54 ist es ferner von Vorteil, wenn die Aufheizzone 26 räumlich, insbesondere in der Bewegungsvorschubrichtung 42 begrenzt ist, so dass die Abkühlzone 54 in geringem Abstand von der Aufheizzone 26 liegen kann.

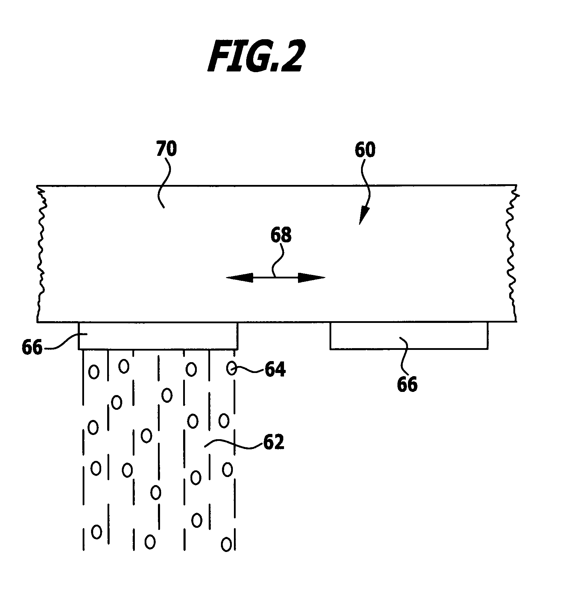

Der Kühlnebelstrom 62 umfasst hierzu, wie in Fig. 2 dargestellt, Kühlnebeltröpfchen 64, die einen mittleren Tröpfchendurchmesser von weniger als 300 µm, noch besser weniger als 100 µm und vorzugsweise weniger als 50 µm aufweisen und durch eine Kühlnebelsprühdüse 66 der Kühleinheit 60 erzeugbar sind, wobei mehrere Kühlnebelsprühdüsen 66 in einer Querrichtung 68 nebeneinander an einem sich in der Querrichtung 68 erstreckenden gemeinsamen Träger 70 angeordnet sind, der dabei ungefähr parallel zu der Oberflächenkontur 16 des Werkstücks 12 ausgerichtet ist.

Vorzugsweise liegt der Träger 70 mit den Kühlnebelsprühdüsen 66 auf einer dem Werkstück 12 abgewandten Seite des Induktionsleiterstücks 28, welches sich ebenfalls im Wesentlichen parallel zur Querrichtung 68, und im Wesentlichen parallel zur Querrichtung 18 der Oberflächenkontur 16 und quer zur Längsrichtung 14 erstreckt.

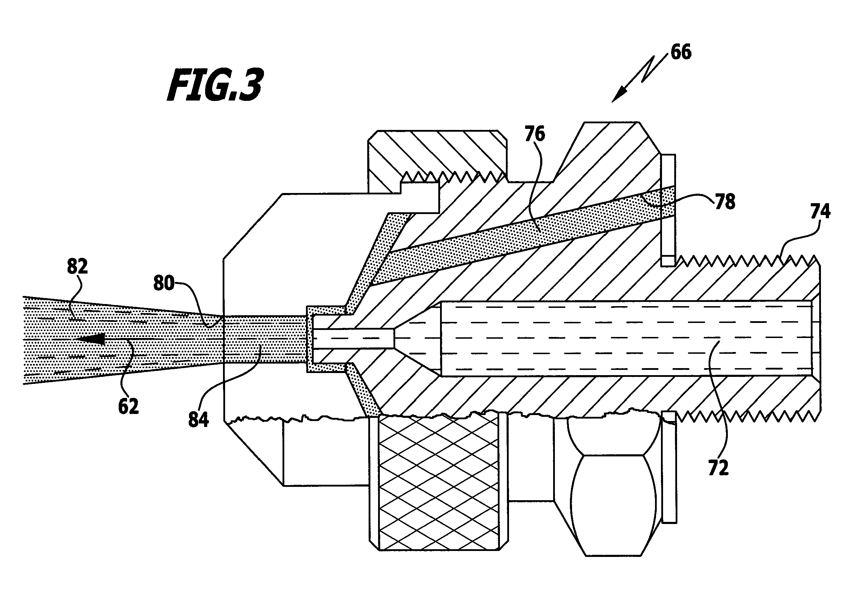

Vorzugsweise sind die Kühlnebelsprühdüsen 66, wie in Fig. 3 dargestellt, so ausgebildet, dass diese einen Kühlflüssigkeitsstrom 72, welcher über einen ersten Anschluss 74 zugeführt wird, sowie einen Gasstrom 76, welcher über um den Kühlflüssigkeitsanschluss 74 herum angeordnete Bohrungen 78 zugeführt wird, miteinander mischen, so dass aus einer Düsenöffnung 80 ein den Kühlnebelstrom 62 mitführender Kühlgasstrom 82 austritt, der in einem Mischraum 84 der Kühlnebelsprühdüse 66 durch Zerstäubung des Kühlflüssigkeitsstroms 72 unter Beteiligung des Gasstroms 76 generiert wurde und Kühlnebeltröpfchen 64 trägt, welche die vorstehend beschriebene Größe aufweisen.

Als derartige Kühlnebelsprühdüsen 66 können beispielsweise Luftzerstäubungsdüsen oder auch Zweistoffdüsen eingesetzt werden, wie sie die Firma Spraying Systems vertreibt, wobei die Luftzerstäubungsdüsen solche mit Innenmischung oder Außenmischung sein können und solche mit einem Rundstrahlsprühbild oder mit einem Flachstrahlsprühbild, welches insbesondere im Fall der Kühleinrichtung 60 bei längs des Trägers 70 angeordneten Kühlnebelsprühdüsen 66 vorteilhaft ist.

Der Vorteil der vorstehend beschriebenen erfindungsgemäßen Lösung unter Einsatz eines Kühlgasstroms 82 ist darin zu sehen, dass der den Kühlnebelstrom 62 mitführende Kühlgasstrom 82 die mitgeführten Kühlnebeltröpfchen 64 bei Erreichen und Aufschlagen auf der Abkühlzone 52 verdampfen, so dass sich die Abkühlzone 54 mit ausreichender Kühlleistung kühlen lässt, außerdem aber keine Probleme mit in den Bereich der Aufheizzone 26 in flüssiger Form eintretender Kühlflüssigkeit auftreten.

Vorzugsweise erfolgt die Versorgung der Kühleinheit 60 mit Kühlflüssigkeit durch eine Kühlflüssigkeitszufuhreinrichtung 86 und beispielsweise mit Luft zur Erzeugung des Gasstroms 76 durch eine Luftzufuhreinrichtung 88.

Vorzugsweise ist die Kühleinheit 60 um eine Achse 90 schwenkbar relativ zum Induktor 22 angeordnet, wobei die schwenkbare Anordnung der Kühleinheit 60 entweder an dem Induktor 22, beispielsweise an dem Induktionsleiterstück 28 führenden Zuleitungsstücken 92 erfolgen kann, die beispielsweise fest mit der Bewegungsvorrichtung 42 verbunden sind, so dass damit die Kühleinrichtung 60 sowohl relativ zum Induktor 22 als auch relativ zur Bewegungsvorrichtung 40 bewegbar ist, wobei hierzu ein Stellantrieb 94 vorgesehen ist, welcher sowohl mit den Zuleitungsstücken 92 als auch mit dem Träger 70 verbunden ist und mit welchem ein Verschwenken des Trägers 70 um die Schwenkachse 90 in einem vorgegebenen Winkelbereich erfolgen kann.

Damit kann einerseits durch Drehen der Härteeinheit 20 um die Drehachse 48 sowohl der gesamte Induktor 22 mitsamt der Kühleinrichtung 40 gedreht werden und gleichzeitig besteht noch die Möglichkeit, die Kühleinheit 60 um die Schwenkachse 90 relativ zum Induktor 22 zu verschwenken und somit auch zur Mittelebene 50 desselben zu verschwenken.

Bei dem ersten Ausführungsbeispiel ist als Werkstück 12 ein Ring vorgesehen, welcher beispielsweise eine zylindrische Oberflächenkontur 16 aufweist, so dass in einfacher Weise der Induktor 22 mit definiertem Abstand in der Zustellrichtung 44 zur Oberflächenkontur 16 bewegt werden kann, wenn gleichzeitig eine Bewegung desselben in der Bewegungsvorschubrichtung 42 erfolgt.

Beispielsweise ist es denkbar, in diesem Fall die Bewegungsvorrichtung 40 so auszubilden, dass diese sich entlang eines Umfangs des ringförmigen Werkstücks 12 bewegt und sich hierzu beispielsweise an dem ringförmigen Werkstück 12 abstützt.

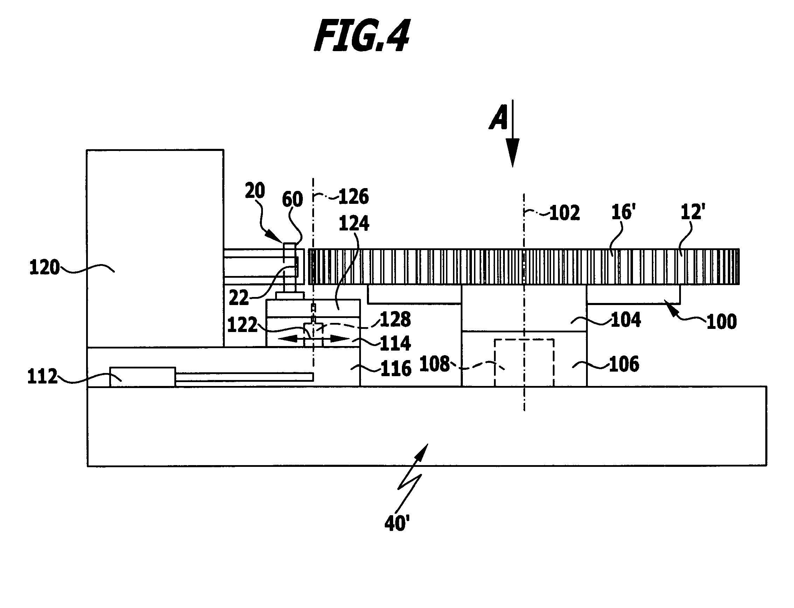

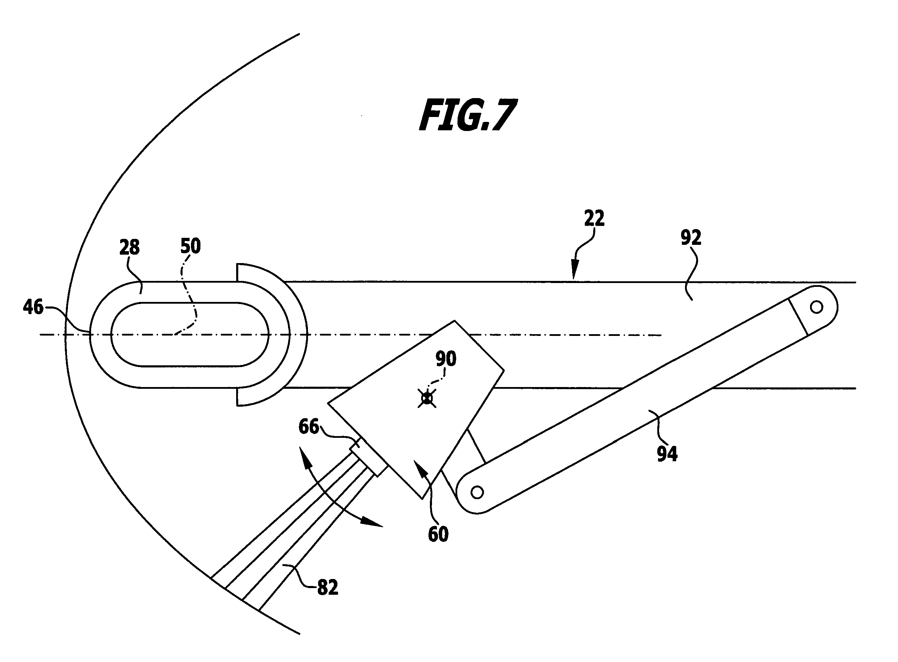

Bei einem zweiten Ausführungsbeispiel einer erfindungsgemäßen Härteeinrichtung, dargestellt in den Fig. 4 bis 7 besteht die Möglichkeit, als Werkstück 12' ein Zahnrad mit einer Oberflächenkontur 16' in Form einer Außenverzahnung zu härten.

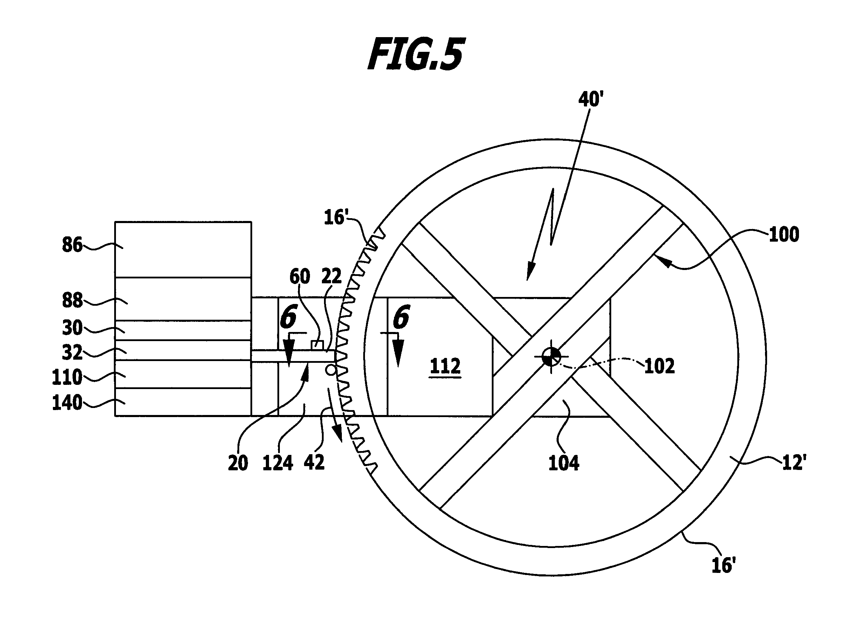

Hierzu umfasst die Bewegungsvorrichtung 40', wie in Fig. 4 und 5 dargestellt, eine Aufnahme 100 für das als Zahnrad ausgebildete Werkstück 12' mit welcher das Werkstück 12' um eine Drehachse 102 drehbar ist, um die als Verzahnung ausgebildete Oberflächenkontur 16' in der Bewegungsvorschubrichtung 42 bewegen zu können.

Die um die Drehachse 102 drehbare Aufnahme 100 für das Werkstück 12' umfasst hierzu einen die Aufnahme 100 haltenden Drehtisch 104, welcher auf einem Basisteil 106 sitzt, in welchem ein den Drehtisch 104 antreibender Drehantrieb 108 angeordnet ist.

Der Drehantrieb 108 ist dabei steuerbar durch eine Bewegungssteuerung 110, welche, genauso wie das Basisteil 106 für den Drehtisch 104 auf einem Maschinengestell 112 angeordnet ist.

Auf dem Maschinengestell 112 sitzt außerdem noch ein Verschiebetisch 114, welcher auf einer Verschiebebasis 116 angeordnet ist und einen Verschiebeantrieb 120 umfasst, mit welchem der Verschiebetisch 114 in einer Verschieberichtung 122 verschiebbar ist, wobei die Verschieberichtung 122 vorzugsweise radial zur Drehachse 102 ausgerichtet ist und parallel zur Zustellrichtung 44 verläuft, die im Zusammenhang mit dem ersten Ausführungsbeispiel beschrieben ist.

Auf dem Verschiebetisch 114 sitzt vorzugsweise noch ein Drehtisch 124, welcher relativ zum Verschiebetisch 114 um eine Drehachse 126 drehbar ist, wobei die Drehachse 126 vorzugsweise parallel zur Drehachse 102 ausgerichtet ist.

Zum Antrieb des Drehtisches 124 ist an dem Verschiebetisch 114 ein Drehantrieb 128 vorgesehen.

Sowohl der Drehantrieb 128 als auch der Verschiebeantrieb 120 sind beide gleichzeitig durch die Bewegungssteuerung 110 steuerbar, die auch den Drehantrieb 108 steuert.

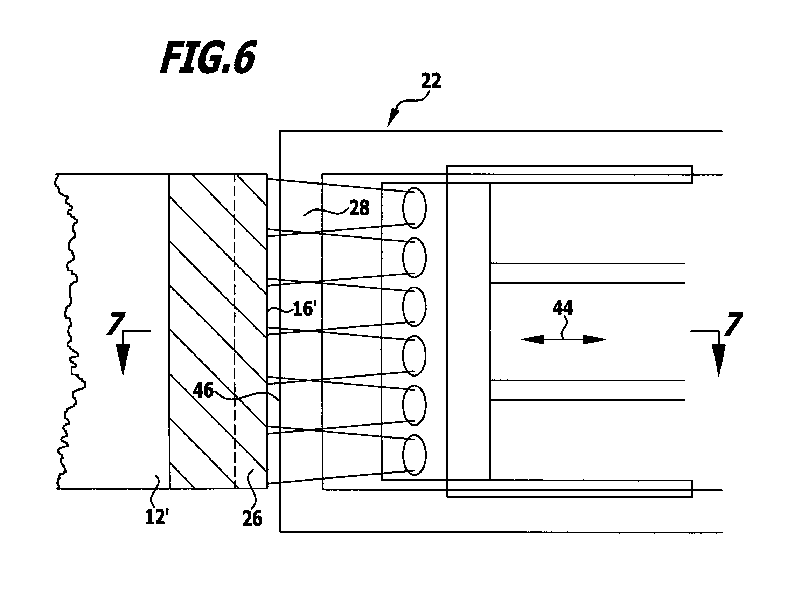

Auf dem Drehtisch 124 sitzt fest montiert die Härteeinheit 20 mit dem Induktor 22 und der Kühleinheit 60, wie vergrößert in Fig. 6 dargestellt.

Die Bewegungsvorrichtung 40' ist beim zweiten Ausführungsbeispiel nun in der Lage, einerseits das Werkstück 12' um die Drehachse 102 zu drehen, um eine Relativbewegung zwischen dem Induktor 22, insbesondere dem Induktionsleiterstück 28 und der gezahnten Oberflächenkontur 16' in Richtung der Bewegungsvorschubrichtung 42 zu erreichen.

Gleichzeitig erfolgt eine Bewegung des Induktors 22, insbesondere mit dem Induktionsleiterstück 28, in der Zustellrichtung 44 dergestalt, dass das Induktionsleiterstück 28 in möglichst geringem Abstand über der Oberflächenkontur 16' in der jeweiligen Aufheizzone 26 und mit der Induktorseite 46 möglichst parallel zur Oberflächenkontur 16 in der jeweiligen Aufheizzone 26 gehalten wird, um eine möglichst gleichmäßige Ausdehnung der Aufheizzone 26 von der Oberflächenkontur 16 in das Werkstück 12' hinein zu erreichen. Gleichzeitig ist noch die Kühleinheit 60 mit den Kühlnebelsprühdüsen 66 um die Achse 90 relativ zum Induktor 22, insbesondere den Zuleitungsstücken 92 des Induktors 22, bewegbar, und zwar mittels des Stellantriebs 94, der ebenfalls an den Zuleitungsstücken 92 einerseits und an der Kühleinheit 60 andererseits angreift und durch eine Variation des Abstandes zwischen den Angriffspunkten in der Lage ist, die Kühleinheit 60 um die Schwenkachse 90 relativ zum Induktor 22 zu verschwenken und um somit auch den Kühlgasstrom 82 relativ zum Induktor 22 und insbesondere relativ zur Mittelebene 50 des Induktors 22 in definierten Schwenkstellungen positionieren zu können.

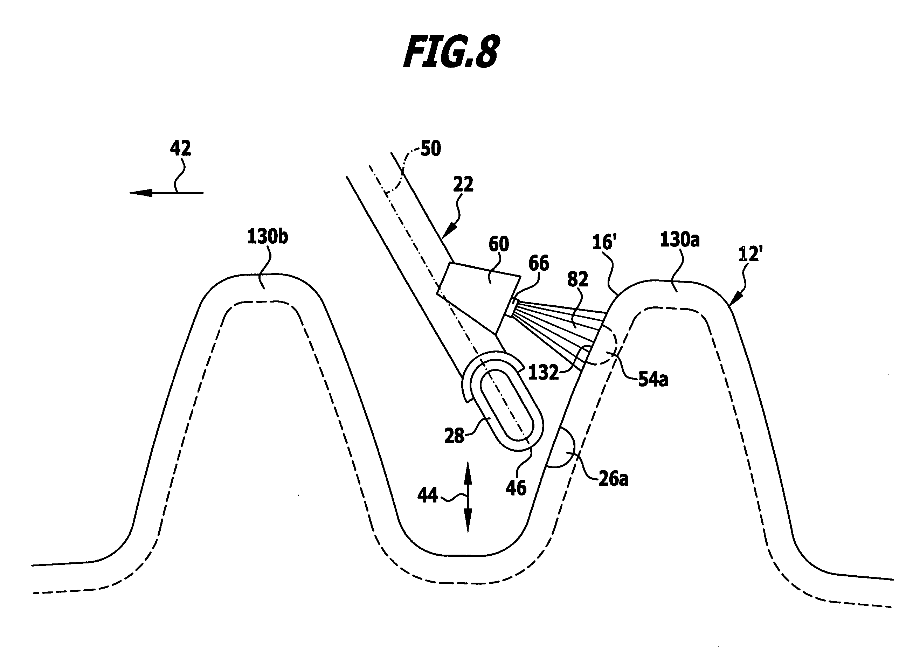

Wie in Fig. 8 beispielhaft dargestellt, erfolgt ein Härten beispielsweise im Bereich der Zähne 130a und 130b dadurch, dass beispielsweise der Induktor 22 mit der Induktorseite 46 des Induktionsleiterstücks 28 so relativ zur Oberflächenkontur 16' ausgerichtet wird, dass in einer abfallenden Flanke 132 des Zahns 130a die Aufheizzone 26a durch den durch das Induktionsleiterstück 28 hindurchfließenden Induktorstrom aufgeheizt wird.

Die Positionierung des Induktionsleiterstücks 28 des Induktors 22 erfolgt dabei einerseits durch Drehung des Werkstücks 12' um die Achse 102 derart, dass sich der Induktor 22 in der Bewegungsvorschubrichtung 42 relativ zum Werkstück 12' bewegt und andererseits dadurch, dass das Induktionsleiterstück 28 in der Zustellrichtung 44 positioniert wird. Damit ist an einer definierten Stelle in der absteigenden Flanke 132 des Zahns 130a das Material des Werkstücks 12' in der Aufheizzone 26a mittels des Induktionsleiterstücks 28 aufheizbar, während in einer vorangegangenen Aufheizzone und jetzt abzukühlenden Abkühlzone 54 mittels des Kühlgasstroms 82 eine Abkühlung erfolgt, die einerseits durch das Gas im Kühlgasstrom 82 bewirkt wird und andererseits durch den vom Kühlgasstrom 82 mitgetragenen Kühlnebelstrom 62, dessen Kühlnebeltröpfchen 64 beim Auftreffen auf die Oberflächenkontur 16' im Bereich der Aufheizzone 26 zumindest teilweise verdampfen und Wärme aus der Abkühlzone 54 aufnehmen, um diese rasch abzukühlen und somit das Material des Werkstücks 12' zu härten.

Die Ausdehnung der Aufheizzone 26 ist bedingt durch den Induktorstrom, die Stromfrequenz, den Abstand des Induktionsleiterteils 28 von der Oberflächenkontur 16' und die Ausrichtung der Mittelebene 50 zur Oberflächenkontur 16', in diesem Fall zur abfallenden Flanke 132, da das elektromagnetische Feld 24 aufgrund des Feldkonzentrators 36 relativ zur Mittelebene 50 des Induktors 22 definiert verläuft.

Um die Abkühlzone 54a und die Aufheizzone 26a möglichst nahe nebeneinander zu positionieren, das heißt um das zunächst in der Aufheizzone 26a aufgeheizte Material des Werkstücks 12' nach möglichst kurzer Zeit in der im Abstand von dieser angeordneten Abkühlzone 54a mit dem Kühlgasstrom 82 abkühlen zu können, insbesondere um mit dem Kühlgasstrom 82 möglichst nahe der Aufheizzone 26a abkühlen zu können, wird vorzugsweise der Induktor 22 mit seiner Mittelebene 50 so ausgerichtet, dass die Mittelebene 50 in einem möglichst großen spitzen Winkel zu abfallenden Flanke 132 des Zahns 130a verläuft, wie in Fig. 8 dargestellt.

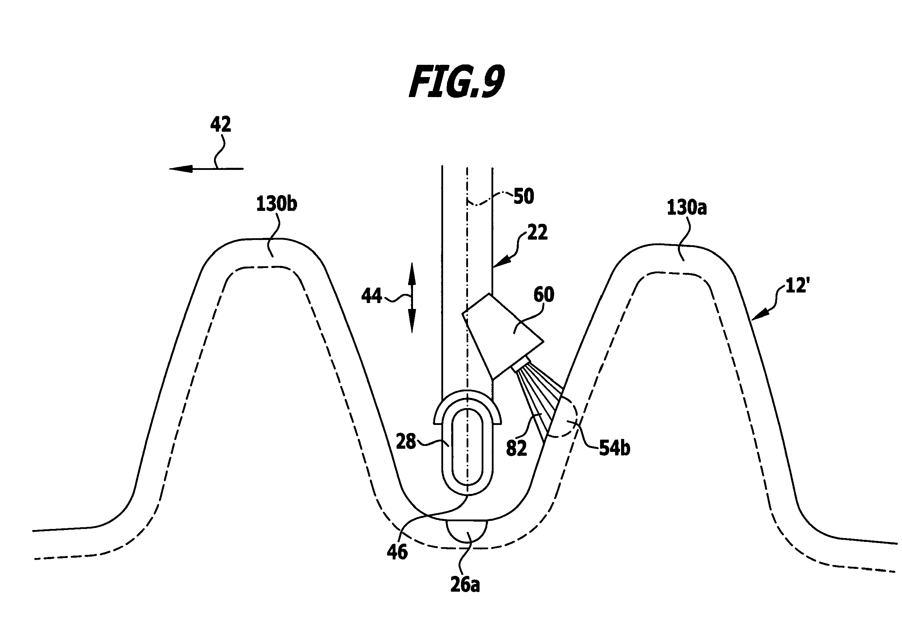

Bei einem Weiterbewegen des Induktors 22 in der Bewegungsvorschubrichtung 42 bewegt sich mit dem Induktionsleiterstück 28 auch die Aufheizzone 26 in der Bewegungsvorschubrichtung 42 weiter und bildet beispielsweise die Aufheizzone 26b, dargestellt in Fig. 9, die im Bereich der tiefsten Stelle zwischen den Zähnen 130a und 130b liegt. Hierzu wird gleichzeitig mit der Bewegung in der Bewegungsvorschubrichtung 42 eine Bewegung des Induktors 22 in Richtung der Zustellrichtung 44 ausgeführt, so dass die Aufheizzone 26b sich möglichst mit der gleichen Tiefe in das Material des Werkstücks 12' hinein erstreckt.

Um dabei Kollisionen mit Verzahnungen 130a und 130b zu vermeiden, ist beispielsweise der Induktor 22 an dieser Stelle mit seiner Mittelebene 50 so ausgerichtet, dass diese beispielsweise radial zur Drehachse 102 des Werkstücks 12' verläuft. Eine entsprechende Nachführung der Schwenkbewegung der Kühleinheit 60 bewirkt ein Nachführen des Kühlgasstroms 82 zum Beaufschlagen der Abkühlzone 54b, wie ebenfalls in Fig. 9 dargestellt.

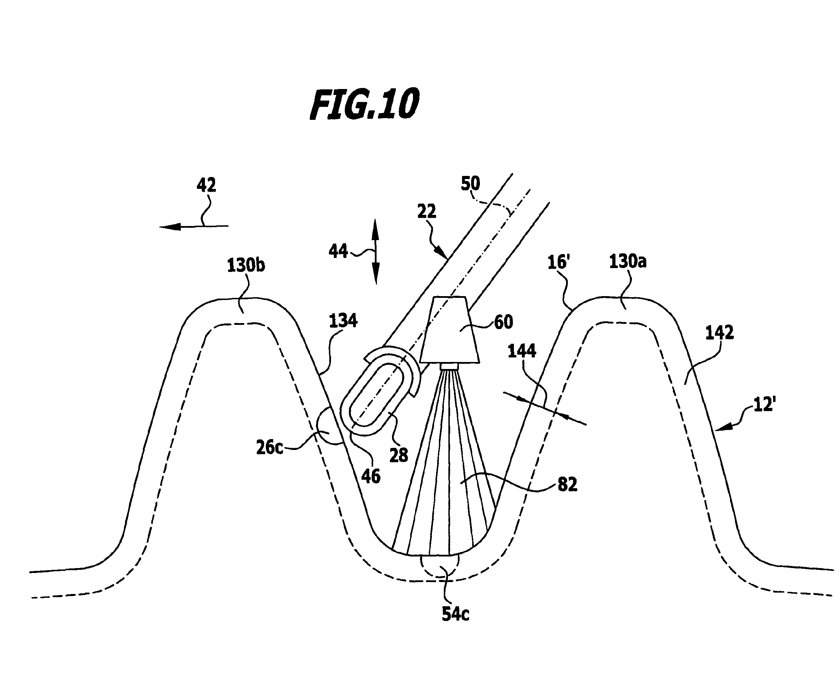

Beim Weiterbewegen des Induktors 22 längs der aufsteigenden Flanke 134 des Zahns 130b wird, wie in Fig. 10 dargestellt, der Induktor 22 außerdem in der Zustellrichtung 44 radial zur Drehachse 102 nach Außen bewegt, um der aufsteigenden Flanke 134 folgen zu können und in dieser beispielsweise die Aufheizzone 26c zu erzeugen, die ebenfalls möglichst gleich tief in das Material des Werkstücks 12' eindringt, wie die Aufheizzonen 26a oder 26b.

Außerdem erfolgt ein Kippen der Mittelebene 30 des Induktors 22 derart, dass in das Material des Werkstücks 12' jeweils an der jeweiligen Stelle von der Oberflächenkontur 16' ausgehend die entstehenden Aufheizzonen 26a, 26b und 26c gleich tief eindringen.

Eine optimale Funktion des Induktors 22 wird dadurch gefördert, dass zur Optimierung des Verlaufs des elektromagnetischen Feldes 24 die Mittelebene 50 des Induktors 22 relativ zur ansteigenden Flanke 134 in einem möglichst großen spitzen Winkel ausgerichtet gehalten wird.

Damit lässt sich ebenfalls wieder der Kühlgasstrom auf eine Abkühlzone 54c richten, die möglichst nahe an der Aufheizzone 26b liegt.

Das Neigen der Mittelebene 50 des Induktors 22 relativ zur Bewegungsvorschubrichtung 42 durch Drehen des Drehtisches 124 um die Drehachse 126 kombiniert mit dem Verschieben des Verschiebetisches 114 und somit auch des Drehtisches 124 in der Verschieberichtung 122 und kombiniert mit der Drehbewegung des Werkstücks 12' um die Drehachse 102 durch Drehen des Drehtisches 104 erlaubt nun, die Oberflächenkontur 16 und den Induktor 22, insbesondere das Induktionsleiterstück 28 so relativ zueinander zu positionieren, dass ein Härten des Materials des Werkstücks 12' in dem oberflächennahen Bereich 52 ausgehend von der jeweiligen Oberflächenkontur 16' und ein Härten des Materials zu einer gehärteten Schicht 142 unter der Oberflächenkontur 16' unter optimalen Bedingungen ausführbar ist.

Insbesondere ist es mit der Bewegungsvorrichtung 42 möglich, das Induktionsleiterstück 28 mit einer derartigen, insbesondere variablen Geschwindigkeit entlang der Oberflächenkontur 16 zu bewegen, dass sich in der wandernden Aufheizzone 26 stets dasselbe Temperaturprofil einstellt.

Der Bewegungssteuerung 110 ist noch eine Gesamtsteuerung 140 übergeordnet, welche nicht nur die Bewegungssteuerung 110 ansteuert und damit die Position der Härteeinheit 20 in der Bewegungsvorschubrichtung 42, der Zustellrichtung 44, der Ausrichtung der Mittelebene 50 und der Schwenkstellung der Kühleinheit 60 um die Schwenkachse 90 relativ zur Oberflächenkontur 16' vorgibt, sondern auch noch den Generator 30 und die Induktorkühlung 32 steuert sondern gleichzeitig auch noch die Kühlflüssigkeitszufuhr 86 und die Luftzufuhreinrichtung 88 steuert und durch Verschwenken des Trägers 70 um die Schwenkachse 90 auch noch die Ausrichtung des Kühlgasstroms 82 relativ zur Oberflächenkontur 16' steuert, so dass an jeder Stelle längs der Oberflächenkontur 16' die Aufheizzone 26 hinsichtlich ihrer Ausdehnung in das Material des Werkstücks 12 hinein und hinsichtlich ihrer Temperatur sowie die Abkühlzone 54 hinsichtlich der Abkühlgeschwindigkeit steuerbar sind und somit auch die Dicke und die Härte einer entstehenden gehärteten Schicht 142 durch die vorstehend genannten Prozessparameter gesteuert werden kann.

Wird nun bei einem Härtevorgang die Härteeinheit 20 sukzessive entlang der Oberflächenkontur 16' bewegt, so besteht die Möglichkeit, eine gehärtete Schicht 142 zu schaffen, die in der Längsrichtung 14 und in der Querrichtung 18 über die Breite der Oberflächenkontur 16' kontinuierlich und zusammenhängend verläuft und im Wesentlichen die gleiche Härtetiefe 144 ausgehend von der Oberflächenkontur 16' erreicht.

Damit besteht insbesondere bei einer gezahnten Außenkontur 16' des Werkstücks 12 die Möglichkeit, ein in der Bewegungsvorschubrichtung 42, im konkreten Fall in Umfangsrichtung des Werkstücks 12' die gehärtete Schicht 140 als durchlaufend in Bewegungsvorschubrichtung 42, das heißt in diesem Fall in Umfangsrichtung, auszuführen, so dass eine gleichmäßige Härtung mit insbesondere im Wesentlichen gleicher Härtetiefe 144 in Umfangsrichtung des Werkstücks 12' erreichbar ist.

## Patentansprüche

1. Härteeinrichtung zum induktiven Härten von sich in einer Längsrichtung (14) erstreckenden Werkstücken in einem sich von einer Oberflächenkontur (16) in das Werkstück (12) hineinerstreckenden Härtebereich, umfassend einen Induktor (22) zur Erzeugung einer Aufheizzone (26) im Werkstück (12) und eine Kühleinheit (60) zur Abkühlung des Werkstücks (12),
**dadurch gekennzeichnet, dass** die Kühleinheit (60) mindestens eine ein Kühlmedium zu Kühlnebeltröpfchen (64) zerstäubende Kühlnebelsprühdüse (66) aufweist, dass die Kühleinheit (60) einen Kühlnebelstrom (62) aus den Kühlnebeltröpfchen (64) erzeugt und mit dem Kühlnebelstrom (62) eine Abkühlzone (52) des Werkstücks (12) zum Abkühlen derselben beaufschlagt.

2. Härteeinrichtung nach einem der voranstehenden Ansprüche, **dadurch gekennzeichnet, dass** die Kühleinheit (60) einen die Ausbreitung des Kühlnebelstroms (62) in Richtung der Abkühlzone (52) mitführenden Kühlgasstrom (82) erzeugt.

3. Härteeinrichtung nach dem Oberbegriff des Anspruchs 1 oder nach einem der voranstehenden Ansprüche, **dadurch gekennzeichnet, dass** die Härteeinrichtung eine Bewegungsvorrichtung (40) für den Induktor (22) aufweist, und dass die Bewegungsvorrichtung eine Relativbewegung zwischen dem Induktor und dem Werkstück erzeugt, mit welcher der Induktor (22) der Oberflächenkontur (16) des Werkstücks (12) folgend positionierbar ist.

4. Härteeinrichtung nach Anspruch 3, **dadurch gekennzeichnet, dass** die Bewegungsvorrichtung (40) das Werkstück (12) bewegbar ist, um eine Bewegung des Induktors relativ zur Oberflächenkontur (16) in einer Bewegungsvorschubrichtung (42) zu erreichen.

5. Härteeinrichtung nach Anspruch 3 oder 4, **dadurch gekennzeichnet, dass** mit der Bewegungsvorrichtung (40) der Induktor (22) in einer quer zur Oberflächenkontur (16) verlaufenden Zustellrichtung (44) relativ zum Werkstück (12) bewegbar ist.

6. Härteeinrichtung nach einem der voranstehenden Ansprüche, **dadurch gekennzeichnet, dass** die Härteeinrichtung eine Bewegungsvorrichtung (40) für die Kühleinheit (60) aufweist und dass die Bewegungsvorrichtung (40) eine Relativbewegung zwischen der Kühleinheit (60) und dem Werkstück (12) erzeugt, mit welcher die Kühleinheit (60) der Oberflächenkontur (16) folgend positionierbar ist.

7. Härteeinrichtung nach Anspruch 6, **dadurch gekennzeichnet, dass** mit der Bewegungsvorrichtung (40) die Kühleinheit in einer quer zur Oberflächenkontur (16) verlaufenden Zustellrichtung (44) bewegbar ist.

8. Härteeinrichtung nach dem Oberbegriff des Anspruchs 1 oder nach einem der voranstehenden Ansprüche, **dadurch gekennzeichnet, dass** mit der Bewegungsvorrichtung (40) die Kühleinheit (60) relativ zum Induktor (22) verschwenkbar ist.

9. Härteeinrichtung nach einem der voranstehenden Ansprüche, **dadurch gekennzeichnet, dass** der Induktor (22) ein sich in einer quer zur Längsrichtung (14) verlaufenden Querrichtung (18) erstreckendes Induktionsleiterstück (28) aufweist, welches das zur Aufheizung des Materials des Werkstücks (12) in der Aufheizzone (26) erforderliche elektromagnetische Feld (24) erzeugt.

10. Härteeinrichtung nach Anspruch 9, **dadurch gekennzeichnet, dass** das Induktionsleiterstück (22) auf einer Seite mit einem Feldkonzentrator (36) versehen ist.

11. Verfahren zum Induktionshärten eines sich in einer Längsrichtung (14) erstreckenden Werkstücks (12) in einem sich von einer Oberflächenkontur (16) in das Werkstück (12) hineinerstreckenden Härtebereich mit einem Induktor (22) zum Aufheizen des Werkstücks (12) in einer Aufheizzone (26) und mit einer Kühleinheit (60) zum Abkühlen des Werkstücks (12), **dadurch gekennzeichnet, dass** das Werkstück (12) in einer Abkühlzone (52) mit einem Kühlnebelstrom (62) gekühlt wird.

12. Verfahren nach Anspruch 11, **dadurch gekennzeichnet, dass** der Kühlnebelstrom (62) in einem Kühlgasstrom (82) zu der Abkühlzone (52) geführt wird.

13. Verfahren nach dem Oberbegriff des Anspruchs 11 oder nach Anspruch 11 oder 12, **dadurch gekennzeichnet, dass** die Oberflächenkontur (16) und der Induktor (22) relativ zueinander in einer Bewegungsvorschubrichtung (42) und in einer Zustellrichtung (44) bewegt werden, um den Induktor (22) der Oberflächenkontur (16) nachzuführen.

14. Verfahren nach Anspruch 13, **dadurch gekennzeichnet, dass** der Induktor (22) relativ zu einem Verlauf der Oberflächenkontur (16) mit einer derartigen, insbesondere variierenden Geschwindigkeit bewegbar ist, dass in der Aufheizzone (26) stets dasselbe Temperaturprofil auftritt.

15. Verfahren nach dem Oberbegriff des Anspruchs 11 oder nach einem der Ansprüche 11 bis 14, **dadurch gekennzeichnet, dass** das Härten des Werkstücks (12) durch Aufheizen des Werkstücks (12) in der Aufheizzone (26) und Abkühlen des Werkstücks (12) in der Abkühlzone (52) durch Einstellung von mindestens einer der Größen
- Position des Induktors (22) relativ zur Oberflächenkontur (16),
- Geschwindigkeit in der Bewegungsvorschubrichtung (42),
- Strom durch den Induktor (22),
- Kühlkapazität des Kühlgasstroms (82) pro Zeiteinheit, insbesondere die Beaufschlagungsdichte,
- Lage der Abkühlzone (52) relativ zur Aufheizzone (26) definiert durchführbar ist.
